# FASCICULE DE BREVET EUROPEEN

(11) **EP 0 549 503 B1**
(45) Date de publication et mention de la délivrance du brevet: **30.08.1995**
(21) Numéro de dépôt: 92470035.4
(22) Date de dépôt: 11.12.1992
(51) Int. Cl.: F16L 21/00, F16L 21/06

(54) **Manchon de liaison et son procédé de montage**
Verbindungsmanschette und Montageverfahren
Sleeve connection and mounting process

(30) Priorité: 24.12.1991 FR 9116342
(43) Date de publication de la demande: 30.06.1993
(73) Titulaire: PONT-A-MOUSSON S.A., 54000 Nancy (FR)
(72) Inventeur: Bienfait, Bernard, F-54000 Nancy (FR); Machut, Pierre, 13 Clos Cardinal Mathieu, F-54000 Nancy (FR)
(74) Mandataire: Puit, Thierry

(56) Documents cités:
- DE-C- 838 671
- DE-U- 8 909 973
- GB-A- 2 227 068
- US-A- 4 538 837

## Description

La présente invention est relative à un manchon de liaison pour tuyaux et à son procédé de montage. Plus particulièrement, elle concerne un manchon de liaison pour l'assemblage des tuyaux utilisés pour l'évacuation des eaux pluviales et leur fixation sur les façades des immeubles.

On connaît déjà des conduits d'évacuation d'eaux pluviales constitués par des tuyaux cylindriques assemblés bout à bout et maintenus par des colliers de serrage recevant intérieurement une garniture d'étanchéité ou emboîtés dans des manchons de jonction plus ou moins rigides.

Ce type d'agencement nécessite, en plus, d'avoir recours à des colliers-supports intermédiaires assurant la fixation de l'assemblage sur un support tel qu'un mur de bâtiment, intérieur ou extérieur. De plus, la garniture d'étanchéité de ces colliers de serrage, le plus souvent réalisée en matériau élastomère, présente une durée de vie assez faible et assure une étanchéité ne permettant, ni l'évacuation de l'air refoulé lors de l'écoulement de l'eau dans une conduite installée verticalement, ni lorsque la conduite est posée en extérieur, la visualisation, par débordement au niveau d'un raccord, d'un éventuel bouchage en aval. Un autre inconvénient de ces colliers réside dans le fait qu'ils n'admettent pas de variations diamétrales, même faibles, des tuyaux raccordés, et comme ces colliers sont adaptés à un diamètre déterminé de tuyaux, il est nécessaire d'utiliser autant de types de colliers qu'il existe de diamètres différents de tuyaux. Ainsi, leur présence sur une conduite posée en façade d'un immeuble, ajoutée à celle des colliers-supports est encombrante et inesthétique.

La présente invention a pour but de remédier à ces inconvénients. A ces fins, la présente invention a pour objet un manchon de liaison, pour l'assemblage étanche entre deux tuyaux, du type constitué par un collier de serrage et une manchette intérieure d'étanchéité, ledit collier de serrage entourant ladite manchette et comportant un bracelet cylindrique métallique ouvert réalisé dans un matériau élastiquement déformable ainsi que des moyens de serrage associés audit bracelet, ladite manchette d'étanchéité, réalisée dans un matériau métallique élastiquement déformable, présentant la forme générale d'un entonnoir ouvert dont les extrémités se recouvrent, ledit entonnoir étant constitué de deux bagues coaxiales de diamètres différents réunies entre elles par une partie centrale formant épaulement.

L'invention a également pour objet un procédé d'assemblage vertical étanche entre deux tuyaux par l'intermédiaire d'un manchon de liaison comme décrit précédemment, où, dans un premier temps, on positionne, de manière centrée, la manchette dans le collier de serrage puis, dans un second temps, on introduit le tuyau supérieur dans la bague de plus grand diamètre de la manchette jusqu'à ce que ce dernier vienne buter sur l'épaulement de ladite manchette, ledit tuyau étant alors assujetti au manchon par un moyen de serrage et enfin, dans un dernier temps, on introduit le tuyau inférieur dans l'espace annulaire compris entre la surface externe de la bague de plus petit diamètre et la surface interne dudit collier et ce jusqu'à venir en butée sur l'épaulement de la manchette, un serrage final de l'ensemble des moyens de serrage assurant l'étanchéité et la rigidité de l'assemblage.

Les avantages apportés par cette invention consistent notamment en ce que la manchette est réalisée dans un matériau métallique élastiquement déformable, de préférence en acier inoxydable, permettant la continuité du fil d'eau dans la conduite et l'évacuation de l'air circulant à contre-courant, voire de l'eau dans le cas d'un bouchage en aval. Un exemple de réalisation de l'invention va maintenant être décrit en regard des dessins annexés sur lesquels :
- la figure 1 représente une vue en perspective d'une manchette appartenant au manchon de liaison selon l'invention, en position de repos,
- la figure 2 est une vue en perspective d'un collier équipé de moyens de serrage conformes à l'invention,
- la figure 3 est une vue en coupe axiale d'un assemblage de deux tuyaux réalisé au moyen de la manchette représentée sur la figure 1 et du collier de la figure 2,
- la figure 4 est une vue de dessus de l'assemblage représenté sur la figure 3.

L'invention a pour objet un manchon de liaison entre deux tuyaux T1, T2 constitué d'un collier de serrage 1 et d'une manchette 2.

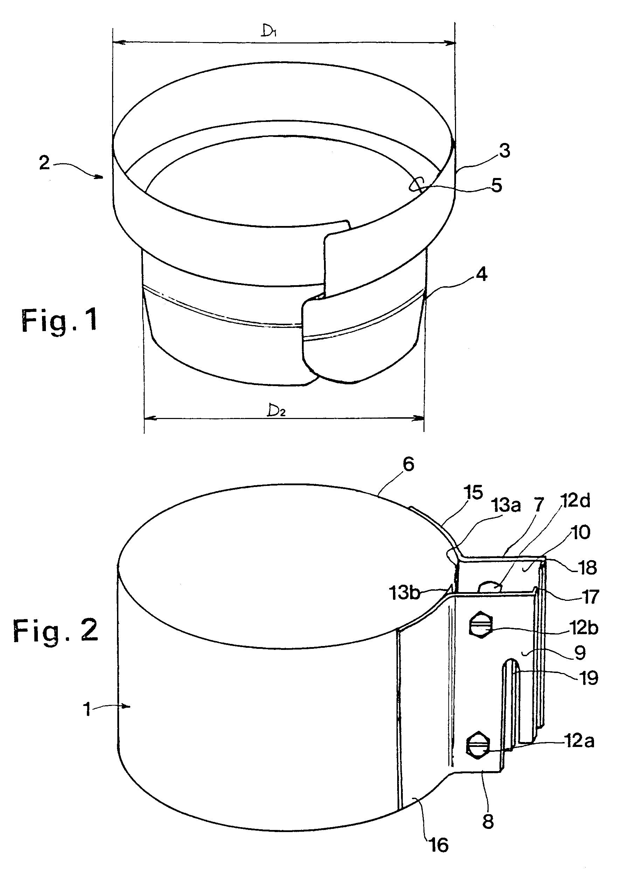

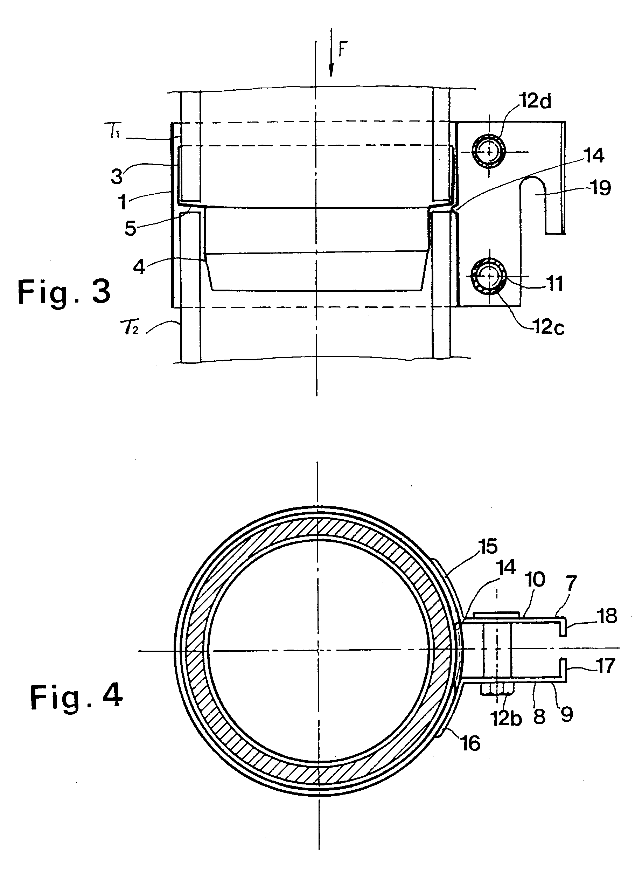

On a représenté, à la figure 1, une manchette intérieure d'étanchéité 2 destinée à la jonction bout à bout de deux tuyaux T1 et T2. Cette manchette 2, réalisée en un matériau métallique élastiquement déformable présentant la forme générale d'un entonnoir ouvert suivant un demi-plan radial et dont les extrémités se recouvrent, est constituée d'une bague cylindrique ouverte 3 de grand diamètre D1 et d'une bague coaxiale ouverte 4 de petit diamètre D2 qui, dans l'exemple de réalisation décrit, présente une forme partiellement tronconique à conicité dirigée vers l'intérieur mais qui, en variante (non représentée) peut également être de forme cylindrique, ladite bague 3 étant reliée à la bague 4 par une partie centrale 5, également ouverte, pouvant présenter une forme légèrement tronconique et formant épaulement. Un collier de serrage 1 tel que représenté à la figure 2 est destiné à venir entourer la manchette 2 (figure 4) afin de relier de manière étanche les deux tuyaux T1 et T2 (figure 3).

Ce collier de serrage est constitué d'un bracelet métallique 6, élastiquement déformable et présentant la forme d'un cylindre ouvert fendu suivant une génératrice et de moyens de serrage 7 et 8 fixés respectivement aux extrémités 13a et 13b dudit bracelet 6, l'extrémité 13b se prolongeant circonférentiellement au-delà du moyen de serrage 8 qui lui est associé et comportant au moins un bossage 14 situé préférentiellement à mi-hauteur et faisant saillie vers l'intérieur. Chacun des moyens de serrage 7, 8 présente une surface courbe 15, 16 solidaire du bracelet 6 et se prolongeant radialement vers l'extérieur par une aile 9, 10 dont l'extrémité repliée à angle droit forme un raidisseur 17, 18, les deux raidisseurs 17 et 18 étant en regard l'un de l'autre. Chacune des deux ailes 9 et 10 du collier de serrage 1 est pourvue d'au moins un perçage destiné à recevoir un organe de serrage pour le rapprochement et l'écartement desdites ailes et, de manière préférentielle, chacune des deux ailes 9 et 10 est pourvue de deux perçages 11 destinés à recevoir deux organes de serrage du type vis-écrou, les écrous étant constitués par deux cylindres taraudés 12c, 12d, fixés perpendiculairement au plan de l'aile 10 et destinés à recevoir par coopération deux vis 12a et 12b introduites par les perçages 11 ménagés dans l'aile 9, lesdits cylindres 12c et 12d étant d'une longueur suffisante pour servir de butées en fin de serrage desdites vis 12a, 12b et éviter ainsi toute détérioration du bracelet 6 ou des moyens de serrage 7, 8 pouvant résulter d'un serrage excessif. Les ailes 9 et 10 des moyens de serrage 7 et 8 présentent chacune une ouverture 19 en forme d'encoche et formant crochet, les deux ouvertures 19 étant en regard l'une de l'autre et étant destinées à recevoir un organe de fixation sur un support mural, non représenté.

En variante, (non représenté), les cylindres taraudés 12a, 12b peuvent être remplacés par des écrous solidaires de l'aile 10, les raidisseur 17, 18 jouant alors le rôle de butées en fin de serrage des vis coopérant avec lesdits écrous.

Un assemblage réalisé au moyen d'une manchette 2 et d'un collier 1 selon la présente invention est représenté en coupe sur la figure 3 et en vue de dessus sur la figure 4, montrant ainsi l'agencement des différents composants à l'état assemblé final et, en particulier, le positionnement de la manchette 2 qui est située à l'intérieur du collier 1 et qui repose, par son épaulement 5, sur le bossage 14 de l'extrémité 13b du bracelet 6 dudit collier 1.

Pour réunir bout-à-bout deux tuyaux T1 et T2 (Fig. 3) à l'aide d'un manchon tel que décrit précédemment, on positionne tout d'abord la manchette 2 à l'intérieur du collier de serrage 1 de manière à ce que l'épaulement 5 de cette dernière repose sur le bossage intérieur 14 du bracelet métallique 6 dudit collier de serrage 1 assurant ainsi le centrage de la manchette par rapport au collier ; on introduit alors l'extrémité du tuyau supérieur T1 à l'intérieur de la bague 3 de diamètre D1 de la manchette 2 jusqu'à venir buter sur l'épaulement 5 de ladite manchette 2, puis on serre modérément la vis supérieure 12b de façon à assujettir le collier 1 au tuyau T1 ; le montage ainsi réalisé vient ensuite coiffer l'extrémité du tuyau inférieur T2 de façon à ce que celle-ci s'insère dans l'espace annulaire compris entre la surface externe de la bague 4 de diamètre D2 de la manchette 2 et la surface interne du collier de serrage 1 et ce jusqu'à venir buter contre l'épaulement 5 de ladite manchette 2 et contre le bossage intérieur 14 de l'extrémité 13b du collier 1, l'assemblage étanche et rigide étant alors obtenu par le serrage final des vis 12a et 12b. Ce serrage est cependant limité par le contact des cylindres taraudés 12c et 12d avec la face interne de l'aile 9, ce contact intervenant notamment lorsque les diamètres des tuyaux T1 et T2 sont minimaux, mais néanmoins compris dans la gamme de tolérances diamétrales admises. L'étanchéité, dans le sens d'un écoulement gravitaire, est ainsi assurée par le serrage de la partie cylindrique 3 de la manchette 2 sur la périphérie de l'extrémité inférieure du tuyau supérieur T1 ; cependant, si le niveau venait à s'élever dans la conduite en raison d'un bouchage en aval par exemple, celui-ci serait immédiatement détecté grâce au débordement du liquide qui pourrait s'écouler de bas en haut entre la bague 4 puis la partie centrale 5 de la manchette 2 et le tuyau T2.

Comme on le voit, le raccordement des tuyaux T1 et T2 est réalisé de façon étanche, étant entendu que le fluide véhiculé par les tuyaux T1 et T2 s'écoule dans le sens de la descente, représenté à la Fig. 3 par une flèche F. Cet assemblage ainsi réalisé peut ensuite être reproduit pour chacune des jonctions des tuyaux constituant le conduit d'évacuation. La fente longitudinale 19 dudit collier de serrage 1 peut avantageusement s'accrocher sur un axe horizontal porté par un profilé en forme de U préalablement fixé au mur, assurant ainsi la fixation murale de l'assemblage.

De plus, de par sa déformation élastique qui autorise le recouvrement de ses extrémités et la forme tronconique de sa bague 4, la manchette 2 permet une adaptation aisée aux diamètres externes et internes des tuyaux dans la gamme de tolérances admises et favorise, par ailleurs, la circulation de l'air.

D'autres avantages découlent du collier de serrage selon l'invention : ce dernier, réalisé préférentiellement en acier inoxydable, assure la liaison étanche de deux tuyaux et, en même temps, permet l'accrochage mural de la conduite tout en cachant les pièces de serrage ; la faible épaisseur dudit collier de serrage assurant par ailleurs la continuité de la génératrice visible de la conduite.

## Revendications

1. Manchon de liaison pour l'assemblage étanche entre deux tuyaux (T1, T2) du type constitué par un collier de serrage (1) et une manchette intérieure d'étanchéité (2), ledit collier de serrage (1) entourant ladite manchette (2) et comportant un bracelet cylindrique et métallique ouvert (6) réalisé dans un matériau élastiquement déformable ainsi que des moyens de serrage (7, 8) associés audit bracelet, caractérisé en ce que la manchette d'étanchéité (2), réalisée dans un matériau métallique élastiquement déformable, présente la forme générale d'un entonnoir ouvert dont les extrémités se recouvrent, ledit entonnoir étant constitué de deux bagues (3, 4) coaxiales de diamètres différents (D1, D2) réunies entre-elles par une partie centrale (5) formant épaulement.

2. Manchon selon la revendication 1, caractérisé en ce que la manchette (2) est constituée d'une bague cylindrique ouverte (3) de grand diamètre (D1) et d'une bague coaxiale ouverte (4) de petit diamètre (D2) présentant une forme partiellement tronconique à conicité dirigée vers l'intérieur, lesdites bagues (3, 4) étant reliées entre-elles par une partie centrale (5), ouverte, présentant une forme légèrement tronconique et formant épaulement.

3. Manchon selon la revendication 1, caractérisé en ce que le bracelet cylindrique ouvert (6) comporte à l'une de ses extrémités (13b) au moins un bossage (14) situé à mi-hauteur et faisant saillie vers l'intérieur.

4. Manchon selon la revendication 1, caractérisé en ce que les moyens de serrage (7, 8) fixés aux extrémités du bracelet (6) présentent chacun une surface courbe (15, 16), solidaire du bracelet (6), se prolongeant radialement vers l'extérieur par une aile (9, 10) dont l'extrémité repliée à angle droit forme un raidisseur (17, 18), les deux raidisseurs (17, 18) étant en regard l'un de l'autre.

5. Manchon selon la revendication 4, caractérisé en ce que chacune des deux ailes (9, 10) du collier de serrage (1) est pourvue d'au moins un perçage (11) destiné à recevoir un organe de serrage (12a, 12b, 12c, 12d) pour le rapprochement ou l'écartement desdites ailes.

6. Manchon selon la revendication 4, caractérisé en ce que les ailes (9, 10) des moyens de serrage (7, 8) présentent chacune une ouverture (19) en forme d'encoche formant crochet, les deux ouvertures (19) étant en regard l'une de l'autre et étant destinées à recevoir un organe de fixation sur un support mural.

7. Manchon selon l'une quelconque des revendications 1 à 6, caractérisé en ce que la manchette (2) est située à l'intérieur du collier (1) et repose par son épaulement (5) sur le bossage (14) de l'extrémité (13b) dudit collier.

8. Procédé d'assemblage vertical étanche entre deux tuyaux (T1, T2) par l'intermédiaire d'un manchon de liaison suivant l'une quelconque des revendications 1 à 7, caractérisé en ce que, dans un premier temps, on positionne de manière centrée la manchette (2) dans le collier de serrage (1) puis, dans un second temps, on introduit le tuyau supérieur (T1) dans la bague (3) de plus grand diamètre de la manchette (2) jusqu'à ce que ce dernier vienne buter sur l'épaulement (5) de ladite manchette, ledit tuyau (T1) étant alors assujetti au manchon par un moyen de serrage (12b, 12d) et enfin, dans un dernier temps, on introduit le tuyau inférieur (T2) dans l'espace annulaire compris entre la surface externe de la bague (4) de plus petit diamètre et la surface interne dudit collier (1) et ce jusqu'à venir en butée sur l'épaulement (5) de la manchette, un serrage final de l'ensemble des moyens de serrage (12a, 12b, 12c, 12d) assurant l'étanchéité et la rigidité de l'assemblage.

## Claims

1. Connector sleeve for the sealed assembly between two pipes (T1, T2), of the type consisting of a clamping collar (1) and of an internal sealing cuff (2), the said clamping collar (1) surrounding the said cuff (2) and including an open metal cylindrical bracelet (6) made of an elastically deformable material as well as clamping means (7, 8) associated with the said bracelet, characterized in that the sealing cuff (2), made of an elastically deformable metallic material, exhibits the overall shape of an open funnel, the ends of which overlap, the said funnel consisting of two coaxial rings (3, 4) of different diameters (D1, D2) joined together by a central part (5) forming a shoulder.

2. Sleeve according to Claim 1, characterized in that the cuff (2) consists of an open cylindrical ring (3) of large diameter (D1) and of an open coaxial ring (4) of small diameter (D2) exhibiting a partially frustoconical shape, the taper of which points towards the inside, the said rings (3, 4) being joined together by an open central part (5) exhibiting a slightly frustoconical shape and forming a shoulder.

3. Sleeve according to Claim 1, characterized in that the open cylindrical bracelet (6) at one of its ends (13b) includes at least one boss (14) situated mid-way up and projecting inwards.

4. Sleeve according to Claim 1, characterized in that the clamping means (7, 8) which are fastened to the ends of the bracelet (6) each exhibit a curved surface (15, 16) integral with the bracelet (6) and extending radially outwards in the form of a wing (9, 10), of which the end folded over at right angles forms a stiffener (17, 18), the two stiffeners (17, 18) facing one another.

5. Sleeve according to Claim 4, characterized in that each of the two wings (9, 10) of the clamping collar (1) is provided with at least one hole (11) designed to take a clamping member (12a, 12b, 12c, 12d) for moving the said wings closer together or further apart.

6. Sleeve according to Claim 4, characterized in that the wings (9, 10) of the clamping means (7, 8) each exhibit a notch-shaped opening (19) forming a hook, the two openings (19) facing one another and being designed to take a member for fastening onto a wall-type support.

7. Sleeve according to any one of Claims 1 to 6, characterized in that the cuff (2) is situated inside the collar (1) and rests by its shoulder (5) on the boss (14) of the end (13b) of the said collar.

8. Method for sealed vertical assembly between two pipes (T1, T2) using a connector sleeve according to any one of Claims 1 to 7, characterized in that, first of all, the cuff (2) is positioned in a centred manner inside the clamping collar (1) and then, secondly, the upper pipe (T1) is inserted into the larger-diameter ring (3) of the cuff (2) until this pipe comes into abutment on the shoulder (5) of the said cuff, the said pipe (T1) then being secured to the sleeve by a clamping means (12b, 12d) and finally, last of all, the lower pipe (T2) is inserted into the annular space lying between the external surface of the smaller-diameter ring (4) and the internal surface of the said collar (1) until it comes into abutment on the shoulder (5) of the cuff, a final tightening of all the clamping means (12a, 12b, 12c, 12d) ensuring that the assembly is sealed and rigid.

## Patentansprüche

1. Verbindungsmuffe für die dichte Verbindung zwischen zwei Rohren (T1, T2), bestehend aus einer Klemmschelle (1) und einer inneren Dichtungsmanschette (2), wobei die genannte Klemmschelle (1) die genannte Manschette (2) umschließt und aus einem offenen, zylinderförmigen Metallring (6) besteht, der aus einem elastisch verformbaren Material hergestellt ist, sowie aus Klemmitteln (7, 8), die mit dem genannten Ring verbunden sind,
dadurch gekennzeichnet, daß die Dichtungsmanschette (2), die aus einem elastisch verformbaren, metallischen Material hergestellt ist, die allgemeine Form eines offenen Trichters aufweist, dessen Enden sich überdecken, wobei der genannte Trichter aus zwei koaxialen Ringen (3, 4) mit verschiedenen Durchmessern (D1, D2) besteht, die miteinander durch einen Mittelteil (5) verbunden sind, der einen Absatz bildet.

2. Muffe nach Anspruch 1,
dadurch gekennzeichnet, daß die Manschette (2) aus einem offenen zylinderförmigen Ring (3) mit großem Durchmesser (D1) und einem offenen koaxialen Ring (4) mit kleinem Durchmesser (D2) besteht, der eine teilweise kegelstumpfförmige Gestalt mit nach innen gerichteter Kegelneigung aufweist, wobei die genannten Ringe (3, 4) durch einen ebenfalls offenen Mittelteil (5) miteinander verbunden sind, der leicht kegelstumpfförmigeist und einen Absatz bildet.

3. Muffe nach Anspruch 1,
dadurch gekennzeichnet, daß der offene zylinderförmige Ring (6) an einem seiner Enden (13b) mindestens einen Wulst (14) aufweist, der sich auf halber Hohe befindet und nach innen heraussteht.

4. Muffe nach Anspruch 1,
dadurch gekennzeichnet, daß die Klemmittel (7, 8), die an den Enden des Rings (6) befestigt sind, jeweils eine gekrümmte Fläche (15, 16) aufweisen, die mit dem Ring (6) fest verbunden ist und sich in radialer Richtung nach außen in einem Flügel (9, 10) fortsetzt, dessen im rechten Winkel umgebogenes Ende eine Versteifung (17, 18) bildet, wobei die beiden Versteifungen (17, 18) einander gegenüberstehen.

5. Muffe nach Anspruch 4,
dadurch gekennzeichnet, daß jeder der beiden Flügel (9, 10) der Klemmschelle (1) mit mindestens einer Bohrung (11) versehen ist, die dazu bestimmt ist, ein Klemmorgan (12a, 12b, 12c, 12d) für das Zusammen- und Auseinanderbewegen der genannten Flügel aufzunehmen.

6. Muffe nach Anspruch 4,
dadurch gekennzeichnet, daß die Flügel (9, 10) der Klemmittel (7, 8) jeweils eine Öffnung (19) in der Form einer Aussparung aufweisen, die einen Haken bildet, wobei die beiden Öffnungen (19) einander gegenüberliegen und dazu bestimmt sind, ein Organ zur Befestigung an einer Wandhalterung aufzunehmen.

7. Muffe nach einem der Ansprüche 1 bis 6,
dadurch gekennzeichnet, daß die Manschette (2) sich im Inneren der Schelle (1) befindet und mit ihrem Absatz (5) auf dem Wulst (14) des Endes (13b) der genannten Schelle (1) aufliegt.

8. Verfahren zum dichten, senkrechten Verbinden von zwei Rohren (T1, T2) mittels einer Verbindungsmuffe nach einem der Ansprüche 1 bis 7,
dadurch gekennzeichnet, daß in einem ersten Arbeitsschritt die Manschette (2) zentriert in der Klemmschelle (1) angeordnet wird, sodann in einem zweiten Arbeitsschritt das obere Rohr (T1) in den Ring (3) mit größerem Durchmesser der Manschette (2) eingeführt wird, bis es an dem Absatz (5) der genannten Manschette in Anschlag kommt, wobei das genannte Rohr (T1) dann durch ein Klemmittel (12b, 12d) gut an der Muffe befestigt wird, und in einem letzten Arbeitsschritt schließlich das untere Rohr (T2) in den ringförmigen Zwischenraum zwischen der Außenfläche des Rings (4) mit kleinerem Durchmesser und der Innenfläche der genannten Schelle (1) eingeführt wird, bis es an dem Absatz (5) der Manschette in Anschlag kommt, wobei ein abschließendes Festziehen der Gesamtanordnung der Klemmittel (12a, 12b, 12c, 12d) die Dichtigkeit und Starrheit der Verbindung gewährleistet.
